(19) Europäisches Patentamt / European Patent Office / Office européen des brevets

(11) **EP 3 637 379 B1**

(12) **FASCICULE DE BREVET EUROPEEN**

(45) Date de publication et mention de la délivrance du brevet:
**21.04.2021 Bulletin 2021/16**

(21) Numéro de dépôt: **19201481.9**

(22) Date de dépôt: **04.10.2019**

(51) Int Cl.:
*G07D 7/206* *(2016.01)*    *G07D 7/20* *(2016.01)*

(54) **PROCÉDÉ DE DÉTECTION DE FRAUDE DOCUMENTAIRE**

VERFAHREN UND VORRICHTUNG ZUR ERKENNUNG VON DOKUMENTENFÄLSCHUNGEN

METHOD AND APPARATUS FOR DETECTING FRADULENT DOCUMENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2018 FR 1859345**

(43) Date de publication de la demande:
**15.04.2020 Bulletin 2020/16**

(73) Titulaire: **Idemia Identity & Security France**
**92400 Courbevoie (FR)**

(72) Inventeurs:
  • **BERGER, Thibault**
  **92400 COURBEVOIE (FR)**
  • **ROSTAING, Laurent**
  **92400 COURBEVOIE (FR)**
  • **ROUH, Alain**
  **92400 COURBEVOIE (FR)**

(74) Mandataire: **Cabinet Le Guen Maillet**
**3, impasse de la Vigie**
**CS 71840**
**35418 Saint-Malo Cedex (FR)**

(56) Documents cités:
**US-A1- 2012 324 534    US-A1- 2015 206 372**
**US-A1- 2018 285 639**

**Description**

L'invention concerne un procédé de détection d'une tentative de fraude documentaire, et un dispositif mettant en œuvre ledit procédé.

Bon nombre de méthodes frauduleuses sont basées sur une utilisation de documents falsifiés. C'est le cas par exemple des méthodes d'intrusion basées sur des documents d'identité falsifiés. C'est le cas aussi des fraudes consistant à procéder à de multiples ouvertures de comptes bancaires dans des banques en ligne offrant des primes lors des ouvertures de compte. La détection de fraudes documentaires est donc un enjeu important en termes de sécurité, mais aussi en termes économiques.

Certaines techniques de fraude documentaire consistent à modifier localement un document d'origine pour réaliser un nouveau document. Par exemple, ces techniques peuvent consister à remplacer une photo dans un document ou à modifier au moins une lettre ou un chiffre dans une zone de texte dudit document. Le document obtenu est très similaire au document d'origine mais contient localement des différences suffisantes pour frauder.

Des techniques existent pour éviter ces fraudes. Certaines sont basées sur une insertion dans les documents de motifs de sécurité ou d'informations infalsifiables telles que des informations biométriques dans des passeports, ces informations biométriques étant encodées dans une puce électronique de certains passeports. Mais, ces techniques nécessitent, soit d'avoir un accès physique au document, soit d'utiliser un système de prise de vue spécifique permettant typiquement de réaliser des images dans un spectre proche infra-rouge ou en fluorescence ultra-violet, ce qui n'est pas possible pour des démarches en ligne où un utilisateur utilise par exemple un smartphone afin de transmettre uniquement une ou plusieurs image(s) couleur(s) de ses documents.

Une solution connue consiste à réaliser une classification d'une version numérisée d'un document afin d'en connaître le type (carte d'identité, carte grise, permis de conduire, passeport). Une fois le document classé, on procède à une extraction d'informations haut niveau telles que des champs de texte (aussi appelés champs OCR (Optical Character Récognition : en terminologie anglo-saxonne) du nom d'une technique employée pour extraire automatiquement des caractères d'un document) ou des informations représentatives d'un visage contenues dans le document. La classification préalable permet de faciliter l'extraction des informations pertinentes pour une détection de fraude. On sait en effet où chercher ces informations dans le document numérisé. De manière générale, ces solutions ont pour inconvénient d'être spécifiques au document étudié et sont sensibles à des erreurs algorithmiques d'extraction des informations haut niveau.

Le document « Document fraud detection at the border: Preliminary observations on human and machine performance, M. Gariup, G. Soederlind, Proc. Europ. Intelligence and Security Informatics Conference (EISIC), pp. 231-238, Aug 2013 » présente un aperçu assez large des approches pour la détection des fraudes documentaires dans le cas du contrôle aux frontières. Les méthodes automatiques proposées dans ce document reposent essentiellement sur une analyse de motifs de sécurité spécifiques ainsi que sur une constitution d'une base de documents de référence qui est souvent un point faible.

Une autre approche consiste à calculer une signature numérique d'une image du document et de la sauvegarder. Cette signature sauvegardée peut ensuite être utilisée ultérieurement afin d'authentifier une autre image de ce même document. Cette approche, qu'on retrouve dans le document de brevet FR3047688, requièrt un enrôlement de chaque document pour calculer sa signature de référence. Cette approche ne peut donc pas être utilisée si cet enrôlement et une infrastructure adaptée pour gérer ces signatures ne sont pas disponibles. L'utilisation de signatures permet de déterminer si deux documents sont identiques ou différents mais ne permet pas de déterminer si les différences sont dues à une fraude.

Le document US2015/0206372A1 concerne un procédé de détection d'une fraude documentaire basé sur un certain nombre de régions correspondantes dans une image d'un document et une image de référence du document, le procédé utilisant une valeur de signature par région. Il est souhaitable de pallier ces inconvénients de l'état de la technique.

Il est notamment souhaitable de proposer une méthode permettant, sans connaissance préalable de caractéristiques des documents et sans prérequis sur la numérisation desdits documents, de déterminer si un premier document est le fruit d'une ou plusieurs modifications locales d'un deuxième document, ce qui serait représentatif d'une tentative de fraude documentaire.

Selon un premier aspect de l'invention, l'invention concerne un procédé de détection d'une fraude documentaire comprenant : obtenir une première image d'un premier document et une deuxième image d'un deuxième document ; appliquer une procédure de recalage d'image à la deuxième image afin de la recaler sur la première image, la procédure de recalage étant basée sur une mise en correspondance de points d'intérêt identifiés dans la première et la deuxième images; appliquer une procédure de détection de zones sensibles à des fraudes documentaires dans la première image et dans la deuxième image recalée ; diviser chaque zone sensible détectée en une pluralité de sous-parties et, pour chaque sous-partie, calculer une signature représentative d'un contenu de ladite sous-partie ; pour chaque sous-partie de la première image, rechercher une sous-partie correspondant spatialement dans la deuxième image recalée, et pour chaque sous-partie de la première image ayant une sous-partie correspondante dans la deuxième image, calculer une mesure de dissimilarité locale entre les sous-parties correspondantes à partir des signatures ; déterminer que le premier et le deuxième documents sont identiques lorsqu'une mesure de dissimilarité globale déterminée à partir d'une distribution de probabilités des mesures de dissimilarités locales est inférieure à un premier seuil prédéterminé et, lorsque le premier document est différent du deuxième document ; déterminer un niveau de différence entre le premier et le deuxième documents en fonction d'une valeur représentative d'une proportion de pixels de la première image situés dans des zones sensibles appartenant à une sous-partie ayant une sous-partie correspondante dans la deuxième image dont la mesure de dissimilarité est supérieure à un deuxième seuil prédéterminé ; et, détecter une fraude lorsque le niveau de différence est inférieur à un troisième seuil prédéterminé.

Le procédé de l'invention est totalement générique puisqu'il ne nécessite aucune connaissance a priori sur les documents analysés, sur les dispositifs ayant acquis les images des documents, sur l'angle de prise de vue des documents et sur l'illumination des documents au moment de la prise de vue.

Selon un mode de réalisation, la procédure de recalage comprend : déterminer qu'aucune fraude n'a été détectée lorsqu'une valeur représentative d'une efficacité de mise en correspondance de points d'intérêt entre la première et la deuxième images est inférieure à un seuil prédéterminé.

Ainsi, la méthode de recalage permet d'écarter des documents qui seraient de types différents.

Selon un mode de réalisation, la procédure de détection de zones sensibles comprend une procédure de détection de visage dans la première image et la deuxième image recalée et/ou une procédure de détection de zones de texte dans la première image et la deuxième image recalée.

Selon un mode de réalisation, la mesure de dissimilarité globale est telle qu'une intégrale d'une distribution de probabilité des mesures de dissimilarité locale entre la première image et la deuxième image recalée, ladite intégrale étant calculée entre la mesure de dissimilarité globale et une valeur maximum des mesures de dissimilarité locale dans ladite distribution, est supérieure à un quatrième seuil prédéterminé, ledit quatrième seuil prédéterminé étant égal à un deuxième pourcentage prédéterminé d'une intégrale de la distribution de probabilité des mesures de dissimilarité locale.

Selon un mode de réalisation, pour déterminer un niveau de différence entre le premier et le deuxième documents le procédé comprend : comparer la mesure de dissimilarité de chaque sous-partie de la première image mise en correspondance avec une sous-partie de la deuxième image avec le deuxième seuil prédéterminé et classer les pixels d'une image, dite image intermédiaire, prise parmi les première ou deuxième images, appartenant à des sous-parties pour lesquelles la mesure de dissimilarité est supérieure au deuxième seuil prédéterminé dans une classe de pixels considérés comme dissimilaires ; former des régions de pixels dissimilaires à partir des pixels classés dans la classe des pixels considérés comme dissimilaires ; calculer une somme des aires des régions de pixels dissimilaires et obtenir un indicateur de dissimilarité représentatif dudit niveau de différence en divisant cette somme par une somme des aires des zones sensibles.

Selon un mode de réalisation, chaque somme est une somme pondérée, chaque aire étant pondérée avec un poids prédéterminé dépendant d'une importance attribuée à la région de pixels dissimilaires ou à la zone sensible correspondant à l'aire calculée.

Selon un mode de réalisation, l'importance attribuée à une région de pixels dissimilaires ou à une zone sensible est prédéfinie en fonction d'un type de contenu de la zone.

Selon un mode de réalisation, les régions de pixels dissimilaires dont une dimension est inférieure à une dimension prédéterminée ne sont pas prises en compte dans le calcul de la somme des aires des régions de pixels dissimilaires.

Selon un mode de réalisation, le procédé comprend : appliquer une procédure de segmentation à la première et à la deuxième images, ladite procédure de segmentation permettant de détecter des quadrilatères dans une image, chaque quadrilatère trouvé dans une image étant considéré comme faisant partie du document contenu dans ladite image, la procédure de recalage d'images et la procédure de détection de zones sensibles étant effectuées dans les quadrilatères identifiés par la procédure de segmentation.

Selon un mode de réalisation, la détection de zones sensibles à des fraudes documentaires dans la première image et dans la deuxième image recalée est exécutée dans des portions de la première image et de la deuxième image recalée comprenant des points d'intérêt mis en correspondance.

Selon un mode de réalisation, chaque zone sensible est un rectangle et est divisée (55) selon un pavage régulier, chaque sous-partie étant un rectangle dont une longueur est un troisième pourcentage prédéfini d'une longueur du rectangle représentant la zone sensible détectée dans lequel la sous-partie se trouve et dont une largeur est un quatrième pourcentage prédéfini d'une largeur dudit rectangle.

Selon un deuxième aspect de l'invention, l'invention concerne un dispositif de détection d'une fraude documentaire comprenant : des moyens d'obtention pour obtenir une première image d'un premier document et une deuxième image d'un deuxième document ; des moyens de traitement pour appliquer une procédure de recalage d'image à la deuxième image afin de la recaler sur la première image, la procédure de recalage étant basée sur une mise en correspondance de points d'intérêt identifiés dans la première et la deuxième images; des moyens de traitement pour appliquer une procédure de détection de zones sensibles à des fraudes documentaires dans la première image et dans la deuxième image recalée ; des moyens de traitement pour diviser chaque zone sensible détecté en une pluralité de sous-parties et, pour chaque sous-partie, pour calculer une signature représentative d'un contenu de ladite sous-partie ; des moyens de recherche pour rechercher, pour chaque sous-partie de la première image, une sous-partie correspondant spatialement dans la deuxième image recalée, et pour chaque sous-partie de la première image ayant une sous-partie correspondante dans la deuxième image, des moyens de calcul pour calculer une mesure de dissimilarité locale entre les sous-parties correspondantes à partir des signatures; des moyens de détermination pour déterminer que le premier et le deuxième documents sont identiques lorsqu'une mesure de dissimilarité globale déterminée à partir d'une distribution de probabilités des mesures de dissimilarité locales est inférieure à un premier seuil prédéterminé ; des moyens de détermination pour déterminer, lorsque le premier document est différent du deuxième document, un niveau de différence entre le premier et le deuxième documents en fonction d'une valeur représentative d'une proportion de pixels de la première image situés dans des zones sensibles appartenant à une sous-partie ayant une sous-partie correspondante dans la deuxième image dont la mesure de dissimilarité est supérieure à un deuxième seuil prédéterminé ; et, des moyens de détection pour détecter une fraude lorsque le niveau de différence est inférieur à un troisième seuil prédéterminé.

Selon un troisième aspect de l'invention, l'invention concerne un programme d'ordinateur, comprenant des instructions pour mettre en œuvre, par un dispositif, le procédé selon le premier aspect, lorsque ledit programme est exécuté par un processeur dudit dispositif.

Selon un quatrième aspect de l'invention, l'invention concerne des moyens de stockage stockant un programme d'ordinateur comprenant des instructions pour mettre en œuvre, par un dispositif, le procédé selon le premier aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un exemple de document ;
- la Fig. 2A illustre une image d'un premier document et la Fig. 2B illustre une image d'un second document, le second document résultant d'une falsification du premier document ;
- la Fig. 3A illustre schématiquement un dispositif mettant en œuvre l'invention ;
- la Fig. 3B illustre schématiquement un exemple d'architecture matérielle d'un module de traitement utilisé pour mettre en œuvre l'invention ;
- la Fig. 4 illustre schématiquement un procédé permettant de déterminer qu'un document résulte d'une falsification d'un autre document ;
- la Fig. 5 illustre schématiquement un exemple de procédure de recalage d'images ;
- la Fig. 6 illustre de manière détaillée une procédure de détection de zones sensibles à des fraudes documentaires ;
- la Fig. 7 décrit schématiquement un exemple de procédé permettant de déterminer si deux images correspondent au même document, à des documents identiques, ou au même document mais avec une altération frauduleuse;
- la Fig. 8 illustre une mise en correspondance de points d'intérêt identifiés dans une première et une deuxième images ; et,
- les Figs. 9 et 10 illustrent schématiquement un résultat de la division en sous-parties de zones sensibles détectées respectivement dans une première image et dans une deuxième image recalée sur la première image.

L'invention est décrite par la suite dans un contexte où le document falsifié est une carte d'identité. L'invention est toutefois adaptée à d'autres types de documents tels que les permis de conduire, les cartes grises, les passeports, etc. Par ailleurs, l'invention est mise en œuvre par un dispositif tel qu'un ordinateur obtenant des documents par l'intermédiaire d'un réseau de communication. L'invention peut toutefois être mise en œuvre par d'autres dispositifs et notamment des dispositifs ayant des capacités d'acquisition d'images tels qu'un téléphone intelligent (« smartphone » en terminologie anglo-saxonne) ou une tablette. De plus, l'invention est appliquée à des images de documents pouvant représenter des documents vus de face ou en perspective. Une vue en perspective d'un document fait apparaître un document déformé. Un document initialement rectangulaire peut alors devenir un quadrilatère quelconque. Mais, l'invention peut s'appliquer aussi à des documents ayant subis des déformations plus complexes, tels que des documents pliés, chiffonnés, non plans, etc.

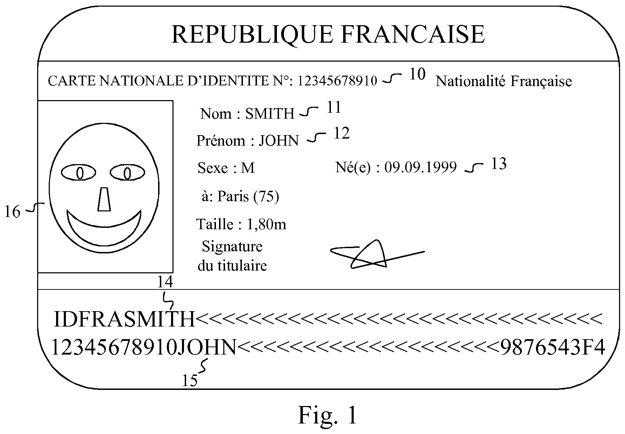

La **Fig. 1** illustre schématiquement un exemple de document.

Le document de la Fig. 1 est une carte d'identité schématisée comprenant plusieurs champs de texte tels que un champ 10 comprenant un numéro, un champ 11 comprenant un nom, un champ 12 comprenant un prénom, un champ 13 comprenant une date de naissance, et des champs 14 et 15 reprenant des informations contenues dans les champs 10 à 13 et notamment le nom, le prénom et le numéro. Tous ces champs sont personnalisables puisqu'ils dépendent du propriétaire de la carte d'identité.

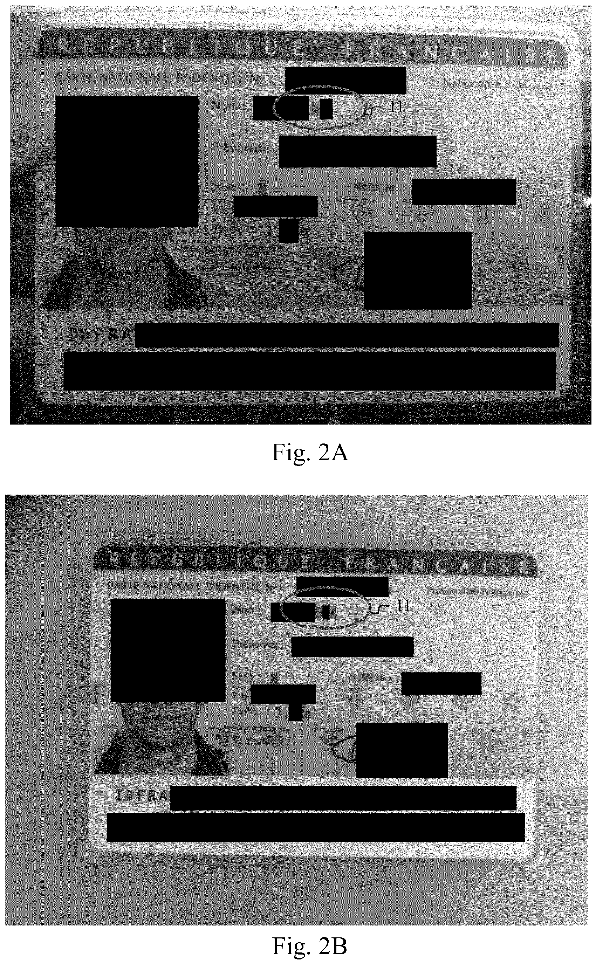

La **Fig. 2A** illustre une image d'un premier document et la Fig. 2B illustre une image d'un second document, le second document résultant d'une falsification du premier document.

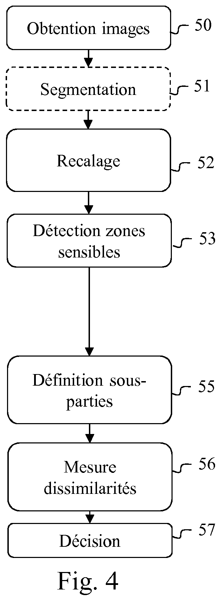

Les documents des Figs. 2A et 2B sont des cartes d'identité. Les Figs. 2A et 2B représentant des documents réels, pour des questions de confidentialité, des masques noirs ont été placés sur les champs des documents qui pourraient permettre de reconnaître le possesseur des documents. Cependant, tous les traitements appliqués à des images décrits par la suite, notamment en relation avec la Fig. 4, sont appliqués à chaque image intégralement, sans prendre en compte les masques noirs. On retrouve dans le premier et le second document, le champ 11. Comme on peut s'en rendre compte, dans le cas du deuxième document, la fraude documentaire a consisté à modifier le champ 11. Ainsi, dans le champ 11, la lettre « N » a été remplacée par la lettre « S » et une lettre « A » a été ajoutée à la fin du champ 11.

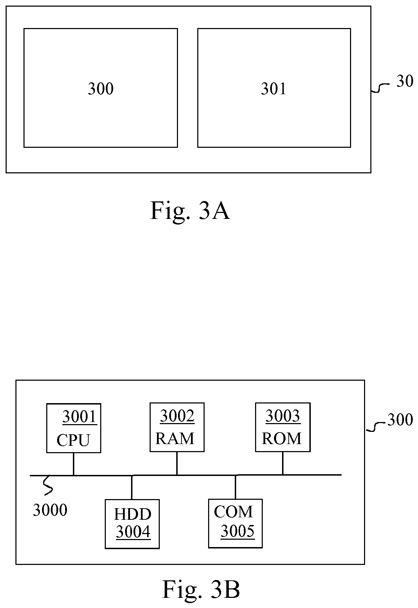

La **Fig. 3A** illustre schématiquement un dispositif mettant en œuvre l'invention.

Le dispositif 30 de la Fig. 3A comprend un module de traitement 300 et un module d'affichage 301 tel qu'un écran. Le module d'affichage 301 affiche des messages destinés à des utilisateurs indiquant si une tentative de fraude documentaire a été détectée. Dans un mode de réalisation, le module d'affichage 301 affiche les images analysées mais aucune information de détection d'une tentative de fraude afin de ne pas donner d'indications à un utilisateur sur la méthode de détection de fraude employée. En revanche, les informations de détection de fraude sont transmises par le dispositif 30 à un système central, non représenté, pour qu'une action soit menée.

La **Fig. 3B** illustre schématiquement un exemple d'architecture matérielle du module de traitement 300 utilisé pour mettre en œuvre l'invention.

Selon l'exemple d'architecture matérielle représenté à la Fig. 3B, le module de traitement 300 comprend alors, reliés par un bus de communication 3000 : un processeur ou CPU (« Central Processing Unit » en anglais) 3001 ; une mémoire vive RAM (« Random Access Memory » en anglais) 3002 ; une mémoire morte ROM (« Read Only Memory » en anglais) 3003 ; une unité de stockage telle qu'un disque dur ou un lecteur de support de stockage, tel qu'un lecteur de cartes SD (« Secure Digital » en anglais) 3004 ; au moins une interface de communication 3005. L'interface de communication 3005 permet au module de traitement 300 de recevoir des images pour lesquelles il doit déterminer s'il y a eu tentative de fraude par exemple à partir d'un réseau de communication. Chaque image peut par exemple être transmise au module de traitement 300 par un dispositif d'acquisition d'images tel qu'un appareil photo, une caméra, un téléphone intelligent.

Le processeur 3001 est capable d'exécuter des instructions chargées dans la RAM 3002 à partir de la ROM 3003, d'une mémoire externe (non représentée), d'un support de stockage (tel qu'une carte SD), ou d'un réseau de communication. Lorsque le module de traitement 3000 est mis sous tension, le processeur 3001 est capable de lire de la RAM 3002 des instructions et de les exécuter. Ces instructions forment un programme d'ordinateur causant la mise en œuvre, par le processeur 3001, de tout ou partie des procédés décrits ci-après en relation avec la Fig. 4.

Le procédé décrit ci-après en relation avec la Fig. 4 peut être implémenté sous forme logicielle par exécution d'un ensemble d'instructions par une machine programmable, par exemple un DSP (« Digital Signal Processor » en anglais), un microcontrôleur ou un GPU (processeur graphique, « Graphics Processing Unit » en terminologie anglo-saxonne), ou être implémenté sous forme matérielle par une machine ou un composant dédié, par exemple un FPGA (« Field-Programmable Gâte Array » en anglais) ou un ASIC (« Application-Specific Integrated Circuit » en anglais).

La **Fig. 4** illustre schématiquement un procédé permettant de déterminer qu'un document résulte d'une falsification d'un autre document.

Dans une étape 50, le module de traitement 300 obtient une première image d'un premier document et une deuxième image d'un deuxième document. Les premier et deuxième documents peuvent être des documents de même type (par exemple deux cartes d'identité) ou de types différents (par exemple une carte d'identité et un passeport). Les première et deuxième images ont pu être acquises avec des dispositifs d'acquisition d'images différents ou identiques, selon des points de vue différents ou identiques et avec des conditions d'illumination différentes ou identiques. Par exemple, le premier document est le document de la Fig. 2A et le deuxième document est le document de la Fig. 2B.

On suppose par la suite que chaque document visé par cette invention est initialement de forme rectangulaire, ce qui est le cas des documents officiels. Par ailleurs, bien que l'invention soit adaptée à des documents ayant subi des déformations plus complexes, tels que des documents pliés, chiffonnés ou non plans, pour simplifier la description, nous nous intéressons dans la suite de la description essentiellement à des déformations dues à des différences de prises de vue. Une image prise d'un point de vue quelconque d'un rectangle est un quadrilatère.

Dans une étape 52, le module de traitement 300 applique une procédure de recalage d'images à la deuxième image afin de la recaler sur la première image, la procédure de recalage étant basée sur une mise en correspondance de points d'intérêt identifiés dans la première et la deuxième images.

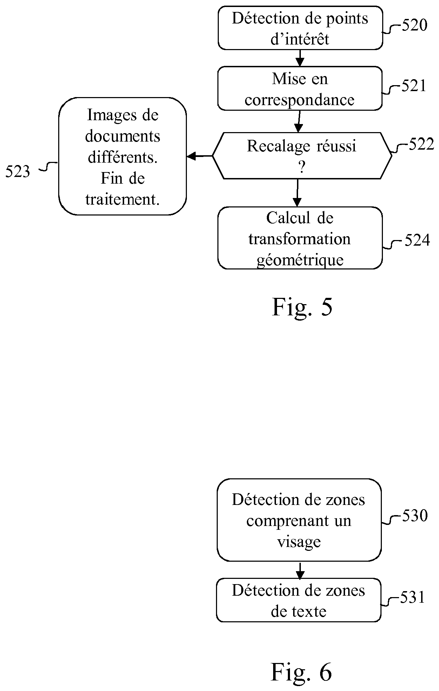

La **Fig. 5** illustre schématiquement un exemple de procédure de recalage d'images.

Dans une étape 520, le module de traitement 300 applique une méthode de recherche de points d'intérêt à la première et à la deuxième images. La méthode de recherche de points d'intérêt est par exemple une méthode décrite dans l'article « SURF : Speeded Up Robust Features, Bay, Tuytelaars, Van Gool, 2006 » ou la méthode décrite dans l'article « SUSurE : Speeded Up Surround Extrema Feature Detector and Descriptor for realtime time applications, Ebrahimi, Cuevas, 2008 ».

L'application de la méthode de recherche de points d'intérêt permet d'obtenir une liste de points d'intérêt pour la première et la deuxième images, chaque point d'intérêt d'une image étant identifié par des coordonnées à deux dimensions dans l'image et par un descripteur local du contenu de l'image.

Dans une étape 521, le module de traitement 300 applique une méthode de mise en correspondance aux points d'intérêt des première et deuxième images. Il s'agit ici de mettre en correspondance des points d'intérêt de la première image avec des points d'intérêt de la deuxième image. Ainsi pour chaque point d'intérêt de la première image, le module de traitement 300 recherche un point d'intérêt correspondant dans la deuxième image. La mise en correspondance de points d'intérêt se fait par exemple par mesure de corrélation entre les voisinages immédiats des points d'intérêt pour lesquels on souhaite déterminer la correspondance. Le voisinage d'un point d'intérêt est en général défini sous forme d'une fenêtre de pixels de taille prédéfinie autour du point d'intérêt. Par exemple, dans un mode de réalisation, la méthode de mise en correspondance utilise une fenêtre carrée de cinq pixels de côté. Il existe diverses mesures de corrélation. Dans un mode de réalisation, la méthode de mise en correspondance utilise une mesure de corrélation de type NCC (corrélation croisée normalisée : « Normalized Cross Corrélation » en terminologie anglo-saxonne) utilisée dans l'article « Wide-baseline Multiple-View Correspondances, V. Ferrari and al., IEEE Conference Proceedings of Computer Vision and Pattern Recognition, CVPR, Vol. 2, Pages 718-725, Madison, Etats Unis, Juin 2003 » ou de type ZNCC (corrélation croisée centrée normalisée : «Zero Mean Normalized Cross Corrélation» en terminologie anglo-saxonne) utilisée par exemple dans l'article «C. Sun, A Fast Matching Method, proc. of Digital Image Computing Techniques and Applications, DICTA, Pages 95-100, Auckland, Nouvelle-Zélande, Décembre 1997 ». Lorsqu'un point d'intérêt de la première image possède plusieurs correspondants dans la deuxième image, le module de traitement 300 choisit le point d'intérêt de la deuxième image offrant la mesure de corrélation la plus élevée avec le point d'intérêt de la première image.

D'autres méthodes de mise en correspondance de points d'intérêt plus sophistiquées peuvent être utilisées. On peut citer à cet effet des méthodes basées sur des calculs de descripteurs locaux et de mise en correspondance par des algorithmes stochastiques tels que RANSAC (Consensus d'échantillons aléatoires, «RANdom SAmple Consensus» en terminologie anglo-saxonne) apparu dans le document « Martin A. Fischler and Robert C. Bolles, «Random Sample Consensus: A Paradigm for Model Fitting with Applications to Image Analysis and Automated Cartography», Comm. Of the ACM, vol. 24, juin 1981, p. 381-395 ». Une méthode décrite dans le document «Lowe D. G., 1999, Object recognition from local scale invariant features, Proceedings of the International Conference on Computer Vision, vol. 2, p.

1150-1157» peut aussi être avantageusement appliquée.

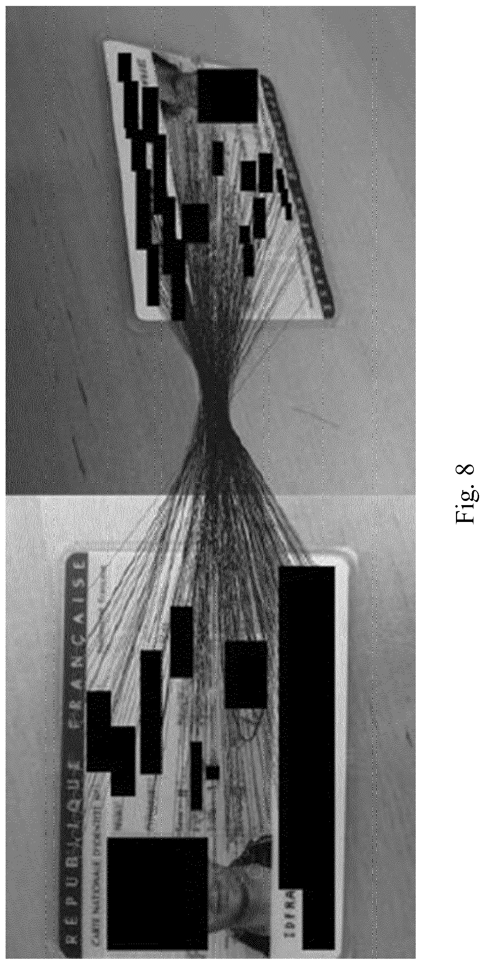

La **Fig.** 8 illustre une mise en correspondance de points d'intérêt identifiés dans une première et une deuxième images.

L'image de gauche de la Fig. 8 correspond à une image du premier document de la Fig. 2A prise de face. L'image de droite de la Fig. 8 correspond à une image du deuxième document de la Fig. 2B prise en perspective. Le deuxième document apparaît déformé. Ce n'est plus un rectangle mais un quadrilatère. Dans la Fig. 8, des lignes droites relient les points d'intérêt détectés dans le premier document aux points d'intérêt détectés dans le deuxième document. On se rend alors compte qu'un grand nombre de points d'intérêt du premier document ont trouvé un correspondant dans le deuxième document, ce qui est logique puisque les deux documents sont de même type et que de plus le deuxième document résulte d'une falsification du premier document.

Dans une étape 522, le module de traitement 300 vérifie si l'exécution de la méthode de mise en correspondance permet de considérer que les deux documents sont au moins similaires. Pour ce faire, par exemple, le module de traitement 300 détermine si une valeur représentative d'une efficacité de mise en correspondance de points d'intérêt entre la première et la deuxième image est inférieure à un seuil prédéterminé. Par exemple, si un pourcentage p de points d'intérêt de la première image pour lesquels un point d'intérêt correspondant a été trouvé dans la deuxième image est inférieur à un pourcentage prédéterminé P. Dans un mode de réalisation, $P=80\%$.

Si $p<P$, le module de traitement 300 considère que le premier document ne correspond pas au deuxième document. Dans ce cas, le module de traitement met fin au procédé de la Fig. 4 et affiche sur le module d'affichage 301 un message indiquant qu'aucune fraude n'a été détectée.

La procédure de recalage d'images permet donc d'écarter des documents qui seraient de types différents.

Si $p\geq P$, lors d'une étape 524, le module de traitement calcule une transformation permettant de recaler la deuxième image sur la première image, *i.e.* permettant de recaler les points d'intérêt de la deuxième image sur les points d'intérêt correspondants de la première image. Pour ce faire, le module de traitement 300 calcule un modèle de déformation géométrique du deuxième document par rapport au premier document. Un tel modèle de déformation géométrique peut être :

- un modèle affine déterminant une application affine reliant des points d'intérêt du deuxième document aux points d'intérêt du premier document tel qu'une translation, une rotation ou une homothétie ;
- un modèle homographique déterminant une application homographique reliant les points d'intérêt du deuxième document aux points d'intérêt du premier document ;

- un modèle d'interpolation déterminé à l'aide d'un algorithme de pondération par distance inverse, tel que proposé dans le document « Scattered data interpolation tests of some methods, Franke R, mathematical of computation, 38(157), 182-200, 1982» et/ou d'interpolation par splines ;

Dans un mode de réalisation, le module de traitement calcule une combinaison de différents modèles avec estimation locale de modèles de déformation. L'utilisation d'une telle combinaison de modèles permet de modéliser des déformations plus complexes qu'avec un seul modèle.

Dans un mode de réalisation, suite au calcul du (ou des) modèle(s) de déformation géométrique, chaque modèle calculé est appliqué à la deuxième image. On obtient alors une deuxième image recalée dans laquelle le deuxième document est recalé sur le premier document.

Dans une étape 53, le module de traitement 300 applique une procédure de détection de zones sensibles à des fraudes documentaires dans la première image et dans la deuxième image recalée. Dans le cadre de l'invention, les zones sensibles ont une définition très générique puisque ce sont des zones d'un document réel qu'un fraudeur aurait intérêt à modifier. Le type de document analysé par le procédé de l'invention n'est jamais pris en compte dans la définition des zones sensibles. Dans ce cadre, on peut considérer que dans un document, il existe deux types de zones sensibles à des fraudes documentaires :

- les zones comprenant une image de visage (i.e. typiquement une image représentant une photo d'identité) ;
- les zones comprenant du texte.

La **Fig. 6** illustre de manière détaillée une procédure de détection de zones sensibles à des fraudes documentaires.

La procédure décrite en relation avec la Fig. 6 correspond à l'étape 53.

Dans une étape 530, le module de traitement exécute une procédure de détection de visage dans la première image et la deuxième image recalée. Le module de traitement 300 applique pour cela, par exemple, le procédé décrit dans le document « Eigenfaces for Face Detection/Recognition, M. Turk and A. Pentland, « eigenfaces for récognition », journal of cognitive Neuroscience, Vol. 3, N°. 1, pp. 71-86, 1991 » ou le procédé décrit dans le document «Face detection system on adaboost algorithm using Haar Classifiers, M. Gopi Krishna, A. Srinivasulu, International Journal of Modern Engineering Research (IJMER), Vol. 2, Issue 5, Sep-oct 2012, pp-3556-3560 ». Si le document compris dans une image comprend une photo de visage, l'étape 530 permet d'obtenir des coordonnées d'au moins un quadrilatère correspondant à une zone sensible dans laquelle se trouve un visage.

Dans une étape 531, le module de traitement 300 applique une procédure de détection de zones de texte dans la première image et la deuxième image recalée. Le module de traitement 300 applique pour cela, par exemple, l'un des procédés décrits dans le document «Review on text String Detectionfrom Natural Scenes, International Journal of Engineering and Innovative Technology (IJEIT), vol. 2, Issue 4, October 2012 » ou le procédé décrit dans le document «Extraction and Recognition ofArticicial Text in Multimedia Documents, C. Wolf, J.M. Jolion, Formal Pattern Analysis & Applications, Feb. 2004, Vol. 6, Issue 4, pp 309-326 ». L'étape 531 permet d'obtenir des coordonnées d'au moins un quadrilatère correspondant à une zone sensible dans laquelle se trouve un texte.

De retour à la Fig. 4, dans une étape 55, le module de traitement 300 divise chaque zone sensible détectée de chaque image en une pluralité de sous-parties et, pour chaque sous-partie, calcule une signature représentative d'un contenu de ladite sous-partie. Dans un mode de réalisation, chaque quadrilatère correspondant à une zone sensible détectée est un rectangle et chaque rectangle est divisé selon un pavage régulier. Par exemple, chaque sous-partie est un rectangle dont la longueur est un pourcentage prédéfini $pl$ de la longueur du rectangle représentant la zone sensible détectée dans lequel la sous-partie se trouve et dont la largeur est un pourcentage prédéfini $pL$ de la largeur dudit rectangle. Dans un mode de réalisation, les pourcentages prédéfinis $pl$ et $pL$ sont compris entre « 10% » et « 33% ».

Dans un mode de réalisation, la signature calculée pour chaque sous-partie est un histogramme d'orientation de gradients (« Histogram of Oriented Gradients (HOG) » en terminologie anglo-saxonne). Ce type de signature est particulièrement adapté pour les éléments texturés tels que les visages comme le montre le document «Histogram of Oriented Gratient for human detection, N. Dalal and B. Triggs, 2005, IEEE Computer Society Conference on Computer Vision and Pattern Recognition (CVPR'05) ». D'autres types de signature peuvent toutefois être utilisés tels que les descripteurs LPB (Local Binary Patterns) décrits dans le document « Local Binary Patterns and Its Application to Facial Image Analysis: A Survey, D. Huang et al, IEEE Transactions on Systems Man and Cybernetics Part C (Applications and Reviews) 41(6):765-781, November 2011 ». Concernant les zones de texte, un histogramme d'orientation de crêtes de texte ou un descripteur de Fourrier peuvent aussi avantageusement être utilisés.

Dans une étape 56, le module de traitement 300 recherche pour chaque sous-partie de la première image, une sous-partie correspondant spatialement dans la deuxième image recalée. Pour chaque sous-partie de la première image ayant une sous-partie correspondante dans la deuxième image recalée, le module de traitement calcule une mesure de dissimilarité, dite mesure de dissimilarité locale, entre les sous-parties correspondantes à partir des signatures des sous-parties correspondantes. Lorsque, par exemple, la signature est un histogramme d'orientation de gradients, la mesure de dissimilarité locale d'une sous-partie de la première image avec une sous-partie de la deuxième image recalée est une différence entre les histogrammes d'orientation de gradients de chaque sous-partie. Un histogramme d'orientation de gradients comprend, pour chaque orientation d'une pluralité d'orientations de gradients prédéfinie, une valeur, dite valeur statistique, représentative d'un nombre de pixels pour lesquels un gradient calculé à la position de ces pixels suit ladite orientation. Une différence entre deux histogrammes d'orientation de gradients est obtenue par exemple en calculant pour chaque orientation apparaissant dans les deux histogrammes, une différence entre les valeurs statistiques correspondant à cette orientation puis en calculant la somme des valeurs absolues des différences calculées pour chaque orientation.

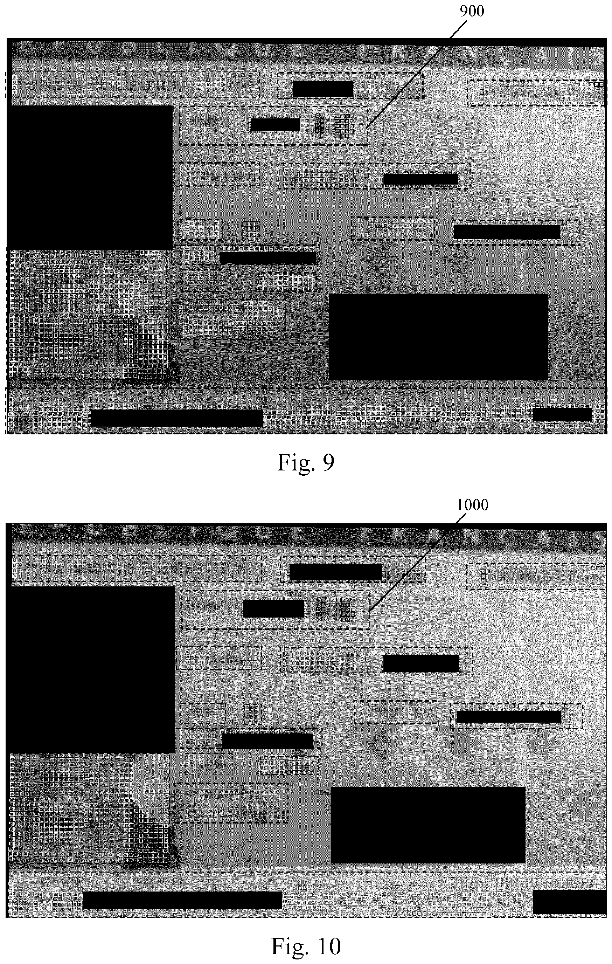

Les Figs. 9 et 10 illustrent schématiquement un résultat de la division en sous-parties de zones sensibles détectées respectivement dans la première image et dans la deuxième image recalée.

Les zones sensibles sont représentées sous forme de rectangles en traits hachurés. Comme on peut le voir dans les Figs. 9 et 10, on retrouve sensiblement les mêmes zones sensibles dans la première image et dans la deuxième image recalée. Chaque zone sensible est divisée en sous-partie de forme carrée. Suivant la valeur de la mesure de dissimilarité locale calculée pour chaque sous-partie suite à la mise en correspondance des sous-parties de la première image avec les sous-parties de la deuxième image recalée, le pourtour de chaque sous-partie apparaît plus ou moins foncé. Une sous-partie qui est très dissimilaire avec une sous-partie avec laquelle elle a été mise en correspondance apparaît plus foncée qu'une sous-partie qui est très proche de la sous-partie avec laquelle elle a été mise en correspondance. On note qu'une grande majorité de sous-parties ont un pourtour clair. On note cependant que les zones sensibles 900 et 1000 comprennent des sous-parties très foncées. Ces sous-parties très foncées correspondent à la lettre « N » du premier document qui a été remplacée par la lettre « S » dans le deuxième document et à la lettre « A » qui a été ajoutée.

Dans un mode de réalisation, lors de l'étape 56, le module de traitement 300 applique une transformation sous forme de pyramide de Gauss à la première image et à la deuxième image recalée. Pour chaque image, chaque zone sensible détectée apparaît dans chaque étage de la pyramide de Gauss résultant de la transformation. La division de chaque zone sensible détectée en une pluralité de sous-parties et, pour chaque sous-partie, le calcul d'une signature représentative d'un contenu de ladite sous-partie, se fait alors dans chaque étage de la pyramide de Gauss. On obtient alors une analyse multiéchelle de la première image et de la deuxième image recalée.

Dans une étape 57, le module de traitement 300 détermine si le premier et le deuxième documents sont représentatifs d'une fraude à partir des mesures de dissimilarité locale calculées.

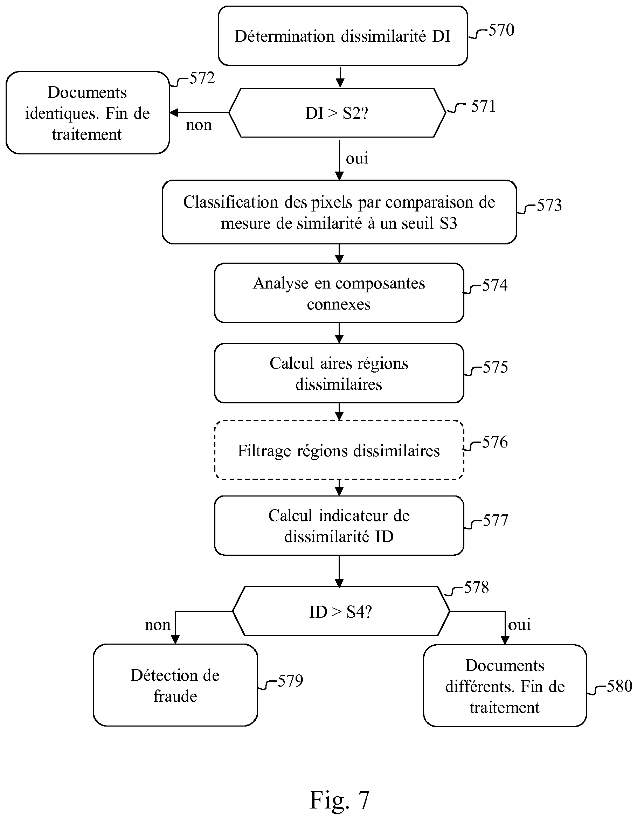

La **Fig. 7** illustre schématiquement un exemple de procédé permettant de déterminer si deux images correspondent au même document, à des documents identiques, ou au même document mais avec une altération frauduleuse correspondant à l'étape 57.

Dans une étape 570, le module de traitement 300 détermine une mesure de dissimilarité $DI$ telle qu'une intégrale d'une distribution de probabilité des mesures de dissimilarité entre la première image et la deuxième image recalée, ladite intégrale étant calculée entre la mesure de dissimilarité $DI$ et une valeur maximum des mesures de dissimilarité dans ladite distribution, est supérieure à un seuil prédéterminé $S1$. Par exemple, $S1$ est égale à « 5% » d'une intégrale de la distribution de probabilité des mesures de dissimilarité. La mesure de dissimilarité $DI$ peut être considérée comme une mesure de dissimilarité globale représentative d'une dissimilarité entre le document de la première image et le document de la deuxième image.

Dans une étape 571, le module de traitement 300 compare la mesure de dissimilarité $DI$ à un seuil prédéterminé $S2$.

Le premier document est considéré comme identique au deuxième document lorsque la mesure de dissimilarité $DI$ est inférieure au seuil prédéterminé $S2$.

Le seuil prédéterminé S2 est déterminé par apprentissage en utilisant une base d'images comprenant des paires d'images représentant des documents identiques et des paires d'images dont un des documents de la paire résulte d'une falsification de l'autre document de la paire.

Dans un mode de réalisation, d'autres mesures de dissimilarité globale peuvent être utilisées. Par exemple, lors de l'étape 570, la mesure de dissimilarité $DI$ peut être remplacée par une mesure de dissimilarité $DJ$. La mesure de dissimilarité $DJ$ est calculée comme l'intégrale de la distribution de probabilité des mesures de dissimilarité entre la première image et la deuxième image recalée entre une valeur $\alpha.d_{max}$ et $d_{max}$, où $d_{max}$ est la valeur maximum des mesures de dissimilarité et $\alpha$ est une pondération comprise dans un ensemble de valeurs] 0,1[. Par exemple $\alpha = 0,5$. Dans ce cas, le seuil prédéterminé S2 est adapté à la mesure de dissimilarité $DJ$.

Si le premier document est identique au deuxième document, le module de traitement 300 affiche un message sur le module d'affichage indiquant que les deux documents comparés sont identiques lors d'une étape 572. Dans ce cas, le module de traitement 300 considère qu'il n'y a pas eu de falsification et le procédé de la Fig. 4 prend fin.

Si le module de traitement 300 détermine que les deux documents sont différents, il doit déterminer à quel point les deux documents sont différents. Pour ce faire, lors d'étapes 573 à 578 le module de traitement 300 détermine un niveau de différence entre le premier et le deuxième documents en fonction d'une valeur représentative d'une proportion de pixels de la première image situés dans des zones sensibles appartenant à une sous-partie, ayant une sous-partie correspondante dans la deuxième image, dont la mesure de dissimilarité est supérieure à un seuil prédéterminé S3.

Dans un mode de réalisation, le module de traitement 300 compare la mesure de dissimilarité de chaque sous-partie de la première image mise en correspondance avec une sous-partie de la deuxième image avec le seuil prédéterminé *S3*. Le seuil S3 est déterminé par apprentissage en utilisant une base d'images comprenant des paires d'images représentant des documents identiques et des paires d'images dont un des documents de la paire résulte d'une falsification de l'autre document de la paire. Pour chaque paire d'images de la base, une distribution des mesures de dissimilarités est calculée. Le seuil S3 est alors déterminé de manière à assurer une bonne séparabilité des distributions des paires d'images identiques et des paires d'images comprenant une image falsifiée. Une classification de type courbe ROC (caractéristique de fonctionnement du récepteur, « receiver operating characteristic » en terminologie anglo-saxonne) peut alors être utilisée pour assurer cette bonne séparabilité.

Lors d'une étape 573, les pixels de la première image (ou de la deuxième image) des sous-parties ayant une mesure de dissimilarité inférieure au seuil S3 sont considérés comme identiques et mis à la valeur « 0 ». Les pixels de la première image (ou de la deuxième image) des sous-parties ayant une mesure de dissimilarité supérieure ou égale au seuil S3 sont considérés comme différents et mis à la valeur « 1 ». Tous les autres pixels de la première (ou de la deuxième image) sont mis à une valeur différente de « 0 » et « 1 ».

Dans une étape 574, une analyse en composantes connexes est appliquée à la première image ainsi modifiée afin d'agréger dans une même région des pixels de ladite image valant « 1 ». L'analyse en composantes connexes permet d'obtenir dans la première image, un ensemble de régions, dites régions dissimilaires, comprenant chacune des pixels ayant la valeur « 1 ».

Dans des étapes 575 et 577, le module de traitement 300 calcule un indicateur de dissimilarité *ID* représentatif du niveau de différence entre le premier et le deuxième documents. Pour ce faire, lors de l'étape 575, le module de traitement 300 calcule l'aire de chaque région dissimilaire (l'aire d'une région peut être représentée par un nombre de pixels dans la région).

Le module de traitement 300 calcule ensuite, lors de l'étape 577, une somme $\sigma_{rd}$ des aires de chaque région dissimilaire et divise cette somme par une somme $\sigma_{zs}$ des aires de chaque zone sensible détectée afin d'obtenir l'indicateur de dissimilarité ID :

$$ID = \frac{\sigma_{rd}}{\sigma_{zs}}$$

Dans une étape 578, le module de traitement 300 compare l'indicateur de dissimilarité *ID* à un seuil prédéterminé S4 afin de déterminer s'il y a eu une tentative de fraude documentaire. Le seuil S4 est déterminé par apprentissage en utilisant une base d'images comprenant des paires d'images représentant des documents identiques et des paires d'images dont un des documents de la paire résulte d'une falsification de l'autre document de la paire. Un indicateur de dissimilarité *ID* est calculé pour chaque paire de la base d'images. Un histogramme des indicateurs de dissimilarité *ID* est alors calculé pour chaque type de paires, chaque histogramme étant représentatif de la distribution de probabilité des indicateurs de dissimilarité *ID.* Dans chaque histogramme, chaque indicateur de dissimilarité est associé à une probabilité que cet indicateur de dissimilarité se produise. Pour chaque valeur d'indicateur de dissimilarité *ID,* une probabilité de fausse alarme pour les paires d'images représentant des documents identiques, et une probabilité de non détection de fraude pour les paires d'images dont un des documents de la paire résulte d'une falsification de l'autre document de la paire, est calculée. A l'aide de ces probabilités, une classification de type courbe ROC est utilisée pour trouver une valeur de seuil S4 permettant d'obtenir une bonne séparabilité entre les indicateurs de dissimilarité représentatif d'une fraude et les indicateurs de dissimilarité représentatifs de documents différents mais ne résultant pas d'une fraude.

Si l'indicateur de dissimilarité *ID* calculé lors de l'étape 577 est inférieur à *S4,* le module de traitement 300 décide lors d'une étape 579 qu'il est en présence d'une tentative de fraude et affiche un message sur le module d'affichage 301 indiquant cette tentative de fraude. Sinon, le module de traitement 300 décide qu'il n'y a pas eu de tentative de fraude lors d'une étape 580 et affiche un message l'indiquant sur le module d'affichage 301.

Dans un mode de réalisation, lors d'une étape 576, intermédiaire entre les étapes 575 et 577, le module de traitement 300 élimine chaque région dissimilaire ayant une dimension inférieure à une dimension prédéterminée A, *i.e.* les pixels de ces régions sont mis à « 0 ». Par exemple, la dimension prédéterminée A est une hauteur et le module de traitement 300 élimine les régions dissimilaires situées dans une zone sensible comprenant du texte ayant une hauteur inférieure à «*A*=10» pixels ou inférieure à « A=5 » pixels. En effet, en dessous d'une telle hauteur, il devient difficile d'analyser un texte de manière fiable. Dans un autre exemple, la dimension prédéterminée A est une aire et le module de traitement 300 élimine les régions dissimilaires ayant une aire inférieure à un « A=100 » pixels carrés. Eliminer des régions dissimilaires ayant une dimension faible permet de réduire un impact d'une dissimilarité non significative due, par exemple, à une erreur de recalage résiduelle ou due à un bruit dans les images.

Dans un mode de réalisation, l'aire de chaque région dissimilaire est pondérée en fonction d'une importance de ladite région dissimilaire. La somme des aires des régions dissimilaires est donc une somme pondérée. De même, dans ce mode de réalisation, la somme des aires des zones sensibles détectées est une somme pondérée en fonction de l'importance de chaque zone sensible. Par exemple, lorsqu'une région dissimilaire se situe dans une zone sensible comprenant un visage, l'aire de cette région reçoit un premier poids prédéterminé plus important qu'un deuxième poids prédéterminé attribué à une aire d'une région dissimilaire comprise dans une zone sensible comprenant du texte. Lorsque le procédé de détection de zones de texte exécuté lors de l'étape 531 permet de différencier les zones de texte personnalisables des zones de texte non-personnalisables dans un document, l'aire d'une région dissimilaire appartenant à une zone de texte personnalisable reçoit un troisième poids prédéterminé plus important qu'un quatrième poids prédéterminé attribué à une aire d'une région dissimilaire appartenant à une zone de texte non-personnalisable.

Dans un mode de réalisation, dans une étape 51, intermédiaire entre l'étape 50 et l'étape 52, le module de traitement 300 applique une méthode de segmentation à la première et à la deuxième images. Par exemple, la méthode de segmentation permet de détecter des quadrilatères dans une image, ce qui est cohérent avec des documents rectangulaires vus en perspectives dans une image. Suite à l'application de la méthode de segmentation, chaque quadrilatère trouvé dans une image est considéré comme faisant partie du document compris dans ladite image. Par exemple, le module de traitement 300 applique pour cela une méthode de segmentation décrite dans le document «Jung, C. R., and R. Schramm, "Rectangle Detection based on a Windowed Hough Transform", Brazilian Symposium on Computer Graphics and Image Processing (SIBGRAPI), Curitiba, 2004 » ou une méthode de segmentation décrite dans le document « Fan, Jian, Detection of quadrilateral document regions from digital photographs. WACV2016 ». Ces deux méthodes permettent de localiser les premier et deuxième documents dans respectivement les première et deuxième images. Ainsi, chaque traitement effectué dans la suite du procédé (correspondant aux étapes 52, 53, 55 et 56) ne s'applique que sur une partie des première et deuxième images contenant respectivement les premier et deuxième documents et non sur l'intégralité des première et deuxième images. De cette manière, on réduit la complexité du procédé.

D'autres méthodes de segmentation plus adaptées à des documents ayant subi des transformations plus complexes peuvent cependant être utilisées.

Dans un mode de réalisation, l'étape 53 de détection de zones sensibles à des fraudes documentaires dans la première image et dans la deuxième image recalée est exécutée uniquement dans des régions de la première image et de la deuxième image recalée comprenant des points d'intérêt détectés lors de l'étape 52. Par exemple, le module de traitement 300 détermine dans la première image (respectivement dans la deuxième image recalée) une enveloppe convexe englobant tous les points d'intérêt détectés dans cette image. Les zones sensibles sont alors recherchées dans chaque enveloppe convexe déterminée. De cette manière, on réduit la complexité du procédé.

## Revendications

1. Procédé de détection d'une fraude documentaire **caractérisé en ce qu'**il comprend :

obtenir (50) une première image d'un premier document et une deuxième image d'un deuxième document ;
appliquer (52) une procédure de recalage d'image à la deuxième image afin de la recaler sur la première image, la procédure de recalage étant basée sur une mise en correspondance de points d'intérêt identifiés dans la première et la deuxième images;
appliquer (53) une procédure de détection de zones sensibles à des fraudes documentaires dans la première image et dans la deuxième image recalée ;
diviser (55) chaque zone sensible détectée en une pluralité de sous-parties et, pour chaque sous-partie, calculer une signature représentative d'un contenu de ladite sous-partie ;
pour chaque sous-partie de la première image, rechercher une sous-partie correspondant spatialement dans la deuxième image recalée, et pour chaque sous-partie de la première image ayant une sous-partie correspondante dans la deuxième image, calculer (56) une mesure de dissimilarité locale entre les sous-parties correspondantes à partir des signatures;
déterminer que le premier et le deuxième documents sont identiques (572) lorsqu'une mesure de dissimilarité globale déterminée (570) à partir d'une distribution de probabilités des mesures de dissimilarités locales est inférieure à un premier seuil prédéterminé et, lorsque le premier document est différent du deuxième document ;
déterminer (577) un niveau de différence entre le premier et le deuxième document en fonction d'une valeur représentative d'une proportion de pixels de la première image situés dans des zones sensibles appartenant à une sous-partie ayant une sous-partie correspondante dans la deuxième image dont la mesure de dissimilarité est supérieure à un deuxième seuil prédéterminé ; et,
détecter une fraude (579) lorsque le niveau de différence est inférieur à un troisième seuil prédéterminé.

**2.** Procédé selon la revendication 1, **caractérisé en ce que** la procédure de recalage comprend :
déterminer qu'aucune fraude n'a été détectée lorsqu'une valeur représentative d'une efficacité de mise en correspondance de points d'intérêt entre la première et la deuxième images est inférieure à un seuil prédéterminé.

**3.** Procédé selon la revendication 1 ou 2, **caractérisé en ce que** la procédure de détection de zones sensibles comprend une procédure de détection de visage dans la première image et la deuxième image recalée et/ou une procédure de détection de zones de texte dans la première image et la deuxième image recalée.

**4.** Procédé selon la revendication 1, 2 ou 3, **caractérisé en ce que**, la mesure de dissimilarité globale est telle qu'une intégrale d'une distribution de probabilité des mesures de dissimilarité locale entre la première image et la deuxième image recalée, ladite intégrale étant calculée entre la mesure de dissimilarité globale et une valeur maximum des mesures de dissimilarité locale dans ladite distribution, est supérieure à un quatrième seuil prédéterminé, ledit quatrième seuil prédéterminé étant égal à un deuxième pourcentage prédéterminé d'une intégrale de la distribution de probabilité des mesures de dissimilarité locale.

**5.** Procédé selon l'une quelconque des revendications précédentes, **caractérisé en ce que** pour déterminer un niveau de différence entre le premier et le deuxième document le procédé comprend :

comparer (573) la mesure de dissimilarité de chaque sous-partie de la première image mise en correspondance avec une sous-partie de la deuxième image avec le deuxième seuil prédéterminé et classer les pixels d'une image, dite image intermédiaire, prise parmi les première ou deuxième images, appartenant à des sous-parties pour lesquelles la mesure de dissimilarité est supérieure au deuxième seuil prédéterminé dans une classe de pixels considérés comme dissimilaires ;
former (574) des régions de pixels dissimilaires à partir des pixels classés dans la classe des pixels considérés comme dissimilaires ;
calculer (575, 577) un somme des aires des régions de pixels dissimilaires et obtenir un indicateur de dissimilarité représentatif dudit niveau de différence en divisant cette somme par une somme des aires des zones sensibles.

**6.** Procédé selon la revendication 5, **caractérisé en ce que**, chaque somme est une somme pondérée, chaque aire étant pondérée avec un poids prédéterminé dépendant d'une importance attribuée à la région de pixels dissimilaires ou à la zone sensible correspondant à l'aire calculée.

**7.** Procédé selon la revendication 6, **caractérisé en ce que** l'importance attribuée à une région de pixels dissimilaires ou à une zone sensible est prédéfinie en fonction d'un type de contenu de la zone.

**8.** Procédé selon la revendication 5, 6 ou 7, **caractérisé en ce que** les régions de pixels dissimilaires dont une dimension est inférieure à une dimension prédéterminée ne sont pas prises en compte dans le calcul de la somme des aires des régions de pixels dissimilaires.

**9.** Procédé selon l'une quelconque des revendications précédentes, **caractérisée en ce que** le procédé comprend : appliquer (51) une procédure de segmentation à la première et à la deuxième images, ladite procédure de segmentation permettant de détecter des quadrilatères dans une image, chaque quadrilatère trouvé dans une image étant considéré comme faisant partie du document contenu dans ladite image, la procédure de recalage d'images et la procédure de détection de zones sensibles étant effectuée dans les quadrilatères identifiés par la procédure de segmentation.

**10.** Procédé selon l'une quelconque des revendications précédentes, **caractérisée en ce que** la détection de zones sensibles à des fraudes documentaires dans la première image et dans la deuxième image recalée est exécutée dans des portions de la première image et de la deuxième image recalée comprenant des points d'intérêt mis en correspondance

**11.** Procédé selon l'une quelconque des revendications précédentes, **caractérisée en ce que** chaque zone sensible est un rectangle et est divisée (55) selon un pavage régulier, chaque sous-partie étant un rectangle dont une longueur est un troisième pourcentage prédéfini d'une longueur du rectangle représentant la zone sensible détectée dans lequel la sous-partie se trouve et dont une largeur est un quatrième pourcentage prédéfini d'une largeur dudit rectangle.

**12.** Dispositif de détection d'une fraude documentaire, **caractérisé en ce qu'**il comprend :

des moyens d'obtention (50) pour obtenir une première image d'un premier document et une deuxième image d'un deuxième document ;
des moyens de traitement (52) pour appliquer une procédure de recalage d'image à la deuxième image afin de la recaler sur la première image, la procédure de recalage étant basée sur une mise en correspondance de points d'intérêt identifiés dans la première et la deuxième images;

des moyens de traitement (53) pour appliquer une procédure de détection de zones sensibles à des fraudes documentaires dans la première image et dans la deuxième image recalée ;

des moyens de traitement (55) pour diviser chaque zone sensible détectée en une pluralité de sous-parties et, pour chaque sous-partie, pour calculer une signature représentative d'un contenu de ladite sous-partie ;

des moyens de recherche pour rechercher, pour chaque sous-partie de la première image, une sous-partie correspondant spatialement dans la deuxième image recalée, et pour chaque sous-partie de la première image ayant une sous-partie correspondante dans la deuxième image, des moyens de calcul (56) pour calculer une mesure de dissimilarité locale entre les sous-parties correspondantes à partir des signatures;

des moyens de détermination pour déterminer que le premier et le deuxième documents sont identiques (572) lorsqu'une mesure de dissimilarité globale déterminée (570) à partir d'une distribution de probabilités des mesures de dissimilarité locales est inférieure à un premier seuil prédéterminé ;

des moyens de détermination (577) pour déterminer, lorsque le premier document est différent du deuxième document, un niveau de différence entre le premier et le deuxième document en fonction d'une valeur représentative d'une proportion de pixels de la première image situés dans des zones sensibles appartenant à une sous-partie ayant une sous-partie correspondante dans la deuxième image dont la mesure de dissimilarité est supérieure à un deuxième seuil prédéterminé ; et,

des moyens de détection (579) pour détecter une fraude lorsque le niveau de différence est inférieur à un troisième seuil prédéterminé.

13. Programme d'ordinateur, **caractérisé en ce qu'**il comprend des instructions pour mettre en œuvre, par un dispositif (300), le procédé selon l'une quelconque des revendications 1 à 11, lorsque ledit programme est exécuté par un processeur dudit dispositif.

14. Moyens de stockage, **caractérisés en ce qu'**ils stockent un programme d'ordinateur comprenant des instructions pour mettre en œuvre, par un dispositif (300), le procédé selon l'une quelconque des revendications 1 à 11, lorsque ledit programme est exécuté par un processeur dudit dispositif.

**Patentansprüche**

1. Verfahren zur Erkennung einer Dokumentenfälschung, **dadurch gekennzeichnet, dass** es Folgendes beinhaltet:

Erhalten (50) eines ersten Bildes eines ersten Dokuments und eines zweiten Bildes eines zweiten Dokuments;

Anwenden (52) einer Bildregistrierungsprozedur auf das zweite Bild, um es gegenüber dem ersten Bild zu registrieren, wobei die Registrierungsprozedur auf einer gegenseitigen Zuordnung von identifizierten Punkten von Interesse in dem ersten und dem zweiten Bild basiert;

Anwenden (53) einer Prozedur zur Erkennung von Bereichen, die für Dokumentenfälschungen anfällig sind, in dem ersten Bild und in dem registrierten zweiten Bild;

Unterteilen (55) jedes erkannten anfälligen Bereichs in eine Vielzahl von Teilabschnitten und Berechnen einer Signatur für jeden Teilabschnitt, die für einen Inhalt des Teilabschnitts repräsentativ ist;

für jeden Teilabschnitt des ersten Bildes, Suchen eines räumlich entsprechenden Teilabschnitts in dem registrierten zweiten Bild, und für jeden Teilabschnitt des ersten Bildes, der einen entsprechenden Teilabschnitt in dem zweiten Bild aufweist, Berechnen (56) eines lokalen Unähnlichkeitsmaßes zwischen den entsprechenden Teilabschnitten anhand der Signaturen;

Bestimmen, dass das erste und das zweite Dokument identisch sind (572), wenn ein anhand einer Wahrscheinlichkeitsverteilung der lokalen Unähnlichkeitsmaße bestimmtes globales Unähnlichkeitsmaß (570) kleiner als ein vorgegebener erster Schwellenwert ist, und, wenn sich das erste Dokument von dem zweiten Dokument unterscheidet;

Bestimmen (577) eines Unterschiedlichkeitsniveaus zwischen dem ersten und dem zweiten Dokument in Abhängigkeit von einem Wert, der für einen Anteil von Pixeln des ersten Bildes, die sich in anfälligen Bereichen befinden, die zu einem Teilabschnitt gehören, der einen entsprechenden Teilabschnitt in dem zweiten Bild aufweist, repräsentativ ist, dessen Unähnlichkeitsmaß größer als ein vorgegebener zweiter Schwellenwert ist; und

Erkennen einer Fälschung (579), wenn das Unterschiedlichkeitsniveau kleiner als ein vorgegebener dritter Schwellenwert ist.

2. Verfahren nach Anspruch 1, **dadurch gekennzeichnet, dass** die Registrierungsprozedur Folgendes beinhaltet:

Bestimmen, dass keine Fälschung erkannt wurde, wenn ein Wert, der für eine Wirksamkeit der Zuordnung von Punkten von Interesse zwischen dem ersten und dem zweiten Bild repräsentativ ist, kleiner als ein vorgegebener Schwellenwert ist.

3. Verfahren nach Anspruch 1 oder 2, **dadurch gekennzeichnet, dass** die Prozedur zur Erkennung von anfälligen Bereichen eine Prozedur zur Erkennung von Gesichtern in dem ersten Bild und dem registrierten zweiten Bild und/oder eine Prozedur zur Erkennung von Textbereichen in dem ersten Bild und dem registrierten zweiten Bild beinhaltet.

4. Verfahren nach Anspruch 1, 2 oder 3, **dadurch gekennzeichnet, dass** das globale Unähnlichkeitsmaß derart ist, dass ein Integral einer Wahrscheinlichkeitsverteilung der lokalen Unähnlichkeitsmaße zwischen dem ersten Bild und dem registrierten zweiten Bild, wobei das Integral zwischen dem globalen Unähnlichkeitsmaß und einem Maximalwert der lokalen Unähnlichkeitsmaße in der Verteilung berechnet wird, größer als ein vorgegebener vierter Schwellenwert ist, wobei der vorgegebene vierte Schwellenwert gleich einem vorgegebenen zweiten Prozentsatz eines Integrals der Wahrscheinlichkeitsverteilung der lokalen Unähnlichkeitsmaße ist.

5. Verfahren nach einem der vorhergehenden Ansprüche, **dadurch gekennzeichnet, dass** das Verfahren zum Bestimmen eines Unterschiedlichkeitsniveaus zwischen dem ersten und dem zweiten Dokument Folgendes beinhaltet:

    Vergleichen (573) des Unähnlichkeitsmaßes jedes Teilabschnitts des ersten Bildes, der einem Teilabschnitt des zweiten Bildes zugeordnet wurde, mit dem vorgegebenen zweiten Schwellenwert und Einordnen der Pixel eines Bildes, als Zwischenbild bezeichnet, ausgewählt aus dem ersten oder dem zweiten Bild, die zu Teilabschnitten gehören, für die das Unähnlichkeitsmaß größer als der vorgegebene zweite Schwellenwert ist, in eine Klasse von Pixeln, die als unähnlich betrachtet werden;
    Bilden (574) von Regionen unähnlicher Pixel anhand der Pixel, die in die Klasse der Pixel, die als unähnlich betrachtet werden, eingeordnet wurden;
    Berechnen (575, 577) einer Summe der Flächen der Regionen unähnlicher Pixel und Erhalten eines Unähnlichkeitsindikators, der für das Unterschiedlichkeitsniveau repräsentativ ist, indem diese Summe durch eine Summe der Flächen der anfälligen Bereiche geteilt wird.

6. Verfahren nach Anspruch 5, **dadurch gekennzeichnet, dass** jede Summe eine gewichtete Summe ist, wobei jede Fläche mit einem vorgegebenen Gewicht gewichtet wird, das von einer Relevanz abhängt, die der Region unähnlicher Pixel oder dem anfälligen Bereich, der der berechneten Fläche entspricht, beigemessen wurde.

7. Verfahren nach Anspruch 6, **dadurch gekennzeichnet, dass** die einer Region unähnlicher Pixel oder einem anfälligen Bereich beigemessene Relevanz in Abhängigkeit von einem Inhaltstyp des Bereichs vordefiniert wird.

8. Verfahren nach Anspruch 5, 6 oder 7, **dadurch gekennzeichnet, dass** die Regionen unähnlicher Pixel, bei denen eine Abmessung kleiner als eine vorgegebene Abmessung ist, bei der Berechnung der Summe der Flächen der Regionen unähnlicher Pixel nicht berücksichtigt werden.

9. Verfahren nach einem der vorhergehenden Ansprüche, **dadurch gekennzeichnet, dass** das Verfahren Folgendes beinhaltet: Anwenden (51) einer Segmentierungsprozedur auf das erste und auf das zweite Bild, wobei die Segmentierungsprozedur es ermöglicht, Vierecke in einem Bild zu erkennen, wobei jedes in einem Bild gefundene Viereck als zu dem Dokument, das in dem Bild enthalten ist, zugehörig betrachtet wird, wobei die Bilderregistrierungsprozedur und die Erkennungsprozedur anfälliger Bereiche in den durch die Segmentierungsprozedur identifizierten Vierecken durchgeführt wird.

10. Verfahren nach einem der vorhergehenden Ansprüche, **dadurch gekennzeichnet, dass** die Erkennung, in dem ersten Bild und in dem registrierten zweiten Bild, von Bereichen, die für Dokumentfälschungen anfällig sind, in Anteilen des ersten Bildes und des registrierten zweiten Bildes ausgeführt wird, die einander zugeordnete Punkte von Interesse beinhalten.

11. Verfahren nach einem der vorhergehenden Ansprüche, **dadurch gekennzeichnet, dass** jeder anfällige Bereich ein Rechteck ist und gemäß einem regelmäßigen Muster unterteilt (55) ist, wobei jeder Teilabschnitt ein Rechteck ist, bei dem eine Länge ein vordefinierter dritter Prozentsatz einer Länge des Rechtecks ist, das den erkannten anfälligen Bereich, in dem sich der Teilabschnitt befindet, repräsentiert, und bei dem eine Breite ein vordefinierter vierter Prozentsatz einer Breite des Rechtecks ist.

12. Vorrichtung zur Erkennung einer Dokumentenfälschung, **dadurch gekennzeichnet, dass** sie Folgendes beinhaltet:

    Erhaltungsmittel (50) zum Erhalten eines ersten Bildes eines ersten Dokuments und eines zweiten Bildes eines zweiten Dokuments;
Verarbeitungsmittel (52) zum Anwenden einer Bildregistrierungsprozedur auf das zweite Bild, um es gegenüber dem ersten Bild zu registrieren, wobei die Registrierungsprozedur auf einer gegenseitigen Zuordnung von identifizierten Punkten von Interesse in dem ersten und dem zweiten Bild basiert;
Verarbeitungsmittel (53) zum Anwenden einer Prozedur zur Erkennung von Bereichen, die für Dokumentenfälschungen anfällig sind, in dem ersten Bild und in dem registrierten zweiten Bild;
Verarbeitungsmittel (55) zum Unterteilen jedes erkannten anfälligen Bereichs in eine Vielzahl von Teilabschnitten und zum Berechnen einer Signatur für jeden Teilabschnitt, die für einen Inhalt des Teilabschnitts repräsentativ ist;
Suchmittel zum Suchen, für jeden Teilabschnitt des ersten Bildes, eines räumlich entsprechenden Teilabschnitts in dem registrierten zweiten Bild, und für jeden Teilabschnitt des ersten Bildes, der einen entsprechenden Teilabschnitt in dem zweiten Bild aufweist, Berechnungsmittel (56) zum Berechnen eines lokalen Unähnlichkeitsmaßes zwischen den entsprechenden Teilabschnitten anhand der Signaturen;
Bestimmungsmittel zum Bestimmen, dass das erste und das zweite Dokument identisch sind (572), wenn ein anhand einer Wahrscheinlichkeitsverteilung der lokalen Unähnlichkeitsmessungen bestimmtes globales Unähnlichkeitsmaß (570) kleiner als ein vorgegebener erster Schwellenwert ist;
Bestimmungsmittel (577) zum Bestimmen, wenn sich das erste Dokument von dem zweiten Dokument unterscheidet, eines Unterschiedlichkeitsniveaus zwischen dem ersten und dem zweiten Dokument in Abhängigkeit von einem Wert, der für einen Anteil von Pixeln des ersten Bildes, die sich in anfälligen Bereichen befinden, die zu einem Teilabschnitt gehören, der einen entsprechenden Teilabschnitt in dem zweiten Bild aufweist, repräsentativ ist, dessen Unähnlichkeitsmaß größer als ein vorgegebener zweiter Schwellenwert ist; und
Erkennungsmittel (579) zum Erkennen einer Fälschung, wenn das Unterschiedlichkeitsniveau kleiner als ein vorgegebener dritter Schwellenwert ist.

13. Computerprogramm, **dadurch gekennzeichnet, dass** es Anweisungen zum Umsetzen des Verfahrens nach einem der Ansprüche 1 bis 11 durch eine Vorrichtung (300) beinhaltet, wenn das Programm durch einen Prozessor der Vorrichtung ausgeführt wird.

14. Speichermittel, **dadurch gekennzeichnet, dass** sie ein Computerprogramm speichern, das Anweisungen zum Umsetzen des Verfahrens nach einem der Ansprüche 1 bis 11 durch eine Vorrichtung (300) beinhaltet, wenn das Programm durch einen Prozessor der Vorrichtung ausgeführt wird.

**Claims**

1. Method for detecting document fraud, **characterized in that** it comprises:

obtaining (50) a first image of a first document and a second image of a second document;
applying (52) an image calibration procedure to the second image in order to calibrate it to the first image, the calibration procedure being based on matching points of interest identified in the first and second images;
applying (53) a procedure for detecting regions sensitive to document fraud in the first image and in the calibrated second image;
dividing (55) each detected sensitive region into a plurality of sub-portions and, for each sub-portion, calculating a signature representative of content of said sub-portion;
for each sub-portion of the first image, searching for a spatially corresponding sub-portion in the calibrated second image and, for each sub-portion of the first image having a corresponding sub-portion in the second image, calculating (56) a measure of local dissimilarity between the corresponding sub-portions based on the signatures;
determining that the first and second documents are identical (572) when a measure of global dissimilarity (570) determined based on a probability distribution of the measures of local dissimilarities is lower than a predetermined first threshold and, when the first document is different from the second document;
determining (577) a difference level between the first and the second document on the basis of a value representative of a proportion of pixels in the first image that are located in sensitive regions belonging to a sub-portion having a corresponding sub-portion in the second image whose measure of dissimilarity is greater than a predetermined second threshold; and
detecting fraud (579) when the difference level is lower than a predetermined third threshold.

2. Method according to Claim 1, **characterized in that** the calibration procedure comprises:
determining that no fraud has been detected when a value representative of a matching effectiveness of points of interest between the first and second images is lower than a predetermined threshold.

**3.** Method according to Claim 1 or 2, **characterized in that** the sensitive region detection procedure comprises a procedure of detecting a face in the first image and the calibrated second image and/or a procedure of detecting regions of text in the first image and the calibrated second image.

**4.** Method according to Claim 1, 2 or 3, **characterized in that** the measure of global dissimilarity is such that an integral of a probability distribution of the measures of local dissimilarity between the first image and the calibrated second image, said integral being calculated between the measure of global dissimilarity and a maximum value of the measures of local dissimilarity in said distribution, is greater than a predetermined fourth threshold, said predetermined fourth threshold being equal to a predetermined second percentage of an integral of the probability distribution of the measures of local dissimilarity.

**5.** Method according to any one of the preceding claims, **characterized in that**, in order to determine a difference level between the first and the second document, the method comprises:

comparing (573) the measure of dissimilarity of each sub-portion of the first image matched with a sub-portion of the second image with the predetermined second threshold and classifying the pixels in an image, called intermediate image, taken from among the first and second images, belonging to sub-portions for which the measure of dissimilarity is greater than the predetermined second threshold into a class of pixels considered to be dissimilar;
forming (574) regions of dissimilar pixels based on the pixels classified into the class of pixels considered to be dissimilar;
calculating (575, 577) a sum of the areas of the regions of dissimilar pixels and obtaining a dissimilarity indicator representative of said difference level by dividing this sum by a sum of the areas of the sensitive regions.

**6.** Method according to Claim 5, **characterized in that** each sum is a weighted sum, each area being weighted with a predetermined weight depending on a significance assigned to the region of dissimilar pixels or to the sensitive region corresponding to the calculated area.

**7.** Method according to Claim 6, **characterized in that** the significance assigned to a region of dissimilar pixels or to a sensitive region is predefined on the basis of a type of content in the region.

**8.** Method according to Claim 5, 6 or 7, **characterized**

**in that** the regions of dissimilar pixels having a size smaller than a predetermined size are not taken into account in the calculation of the sum of the areas of the regions of dissimilar pixels.

**9.** Method according to any one of the preceding claims, **characterized in that** the method comprises: applying (51) a segmentation procedure to the first and second images, said segmentation procedure making it possible to detect quadrilaterals in an image, each quadrilateral found in an image being considered to form part of the document contained in said image, the image calibration procedure and the sensitive region detection procedure being performed in the quadrilaterals identified by the segmentation procedure.

**10.** Method according to any one of the preceding claims, **characterized in that** the detection of regions sensitive to document fraud in the first image and in the calibrated second image is carried out in portions of the first image and of the calibrated second image comprising matching points of interest.

**11.** Method according to any one of the preceding claims, **characterized in that** each sensitive region is a rectangle and is divided (55) into a pattern of regular tiles, each sub-portion being a rectangle whose length is a predefined third percentage of a length of the rectangle representing the detected sensitive region in which the sub-portion is located and whose width is a predefined fourth percentage of a width of said rectangle.

**12.** Device for detecting document fraud, **characterized in that** it comprises:

obtainment means (50) for obtaining a first image of a first document and a second image of a second document;
processing means (52) for applying an image calibration procedure to the second image in order to calibrate it to the first image, the calibration procedure being based on matching points of interest identified in the first and second images;
processing means (53) for applying a procedure for detecting regions sensitive to document fraud in the first image and in the calibrated second image;
processing means (55) for dividing each detected sensitive region into a plurality of sub-portions and, for each sub-portion, for calculating a signature representative of content of said sub-portion;
searching means for searching, for each sub-portion of the first image, for a spatially corresponding sub-portion in the calibrated second image and, for each sub-portion of the first image having a corresponding sub-portion in the second image, calculating means (56) for calculating a measure of local dissimilarity between the corresponding sub-portions based on the signatures;

determination means for determining that the first and second documents are identical (572) when a measure of global dissimilarity (570) determined based on a probability distribution of the measures of local dissimilarities is lower than a predetermined first threshold;

determination means (577) for determining, when the first document is different from the second document, a difference level between the first and the second document on the basis of a value representative of a proportion of pixels in the first image that are located in sensitive regions belonging to a sub-portion having a corresponding sub-portion in the second image whose measure of dissimilarity is greater than a predetermined second threshold; and

detection means (579) for detecting fraud when the difference level is lower than a predetermined third threshold.

13. Computer program, **characterized in that** it comprises instructions for a device (300) to implement the method according to any one of Claims 1 to 11, when said program is executed by a processor of said device.

14. Storage means, **characterized in that** they store a computer program comprising instructions for a device (300) to implement the method according to any one of Claims 1 to 11, when said program is executed by a processor of said device.

REPUBLIQUE FRANCAISE

CARTE NATIONALE D'IDENTITE N°: 12345678910 ⌐ 10   Nationalité Française

Nom : SMITH ⌐ 11

Prénom : JOHN ⌐ 12

Sexe : M              Né(e) : 09.09.1999 ⌐ 13

à: Paris (75)

Taille : 1,80m

Signature
du titulaire

14

16

IDFRASMITH<<<<<<<<<<<<<<<<<<<<<<<<<<<<<<<<<<<
12345678910JOHN<<<<<<<<<<<<<<<<<<<<<<9876543F4

15

Fig. 1

Fig. 2A

Fig. 2B

Fig. 3A

Fig. 3B

Obtention images — 50

Segmentation — 51

Recalage — 52

Détection zones sensibles — 53

Définition sous-parties — 55

Mesure dissimilarités — 56

Décision — 57

Fig. 4

Détection de points d'intérêt ⟿520

Mise en correspondance ⟿521

Images de documents différents. Fin de traitement. 523⟿

Recalage réussi ? ⟿522

Calcul de transformation géométrique ⟿524

Fig. 5

Détection de zones comprenant un visage ⟿530

Détection de zones de texte ⟿531

Fig. 6

Détermination dissimilarité DI — 570

Documents identiques. Fin de traitement — 572

DI > S2? — 571

non

oui

Classification des pixels par comparaison de mesure de similarité à un seuil S3 — 573

Analyse en composantes connexes — 574

Calcul aires régions dissimilaires — 575

Filtrage régions dissimilaires — 576

Calcul indicateur de dissimilarité ID — 577

ID > S4? — 578

non

oui

Détection de fraude — 579

Documents différents. Fin de traitement — 580

Fig. 7

Fig. 8

Fig. 9

Fig. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 3047688
- US 20150206372 A1

**Littérature non-brevet citée dans la description**

- **M. GARIUP ; G. SOEDERLIND.** Document fraud detection at the border: Preliminary observations on human and machine performance. *Proc. Europ. Intelligence and Security Informatics Conference (EISIC),* Août 2013, 231-238
- **BAY ; TUYTELAARS ; VAN GOOL.** *SURF : Speeded Up Robust Features,* 2006
- **EBRAHIMI ; CUEVAS.** *SUSurE : Speeded Up Surround Extrema Feature Detector and Descriptor for realtime time applications,* 2008
- **V. FERRARI.** Wide-baseline Multiple-View Correspondances. *IEEE Conference Proceedings of Computer Vision and Pattern Recognition, CVPR,* Juin 2003, vol. 2, 718-725
- **C. SUN.** *A Fast Matching Method, proc. of Digital Image Computing Techniques and Applications, DICTA,* Décembre 1997, 95-100
- **MARTIN A. FISCHLER ; ROBERT C. BOLLES.** Random Sample Consensus: A Paradigm for Model Fitting with Applications to Image Analysis and Automated Cartography. *Comm. Of the ACM,* 24 Juin 1981, 381-395
- **LOWE D. G.** Object recognition from local scale invariant features. *Proceedings of the International Conference on Computer Vision,* 1999, vol. 2, 1150-1157
- **FRANKE R.** Scattered data interpolation tests of some methods. *mathematical of computation,* 1982, vol. 38 (157), 182-200
- **M. TURK ; A. PENTLAND.** Eigenfaces for Face Detection/Recognition. *journal of cognitive Neuroscience,* 1991, vol. 3 (1), 71-86
- **M. GOPI KRISHNA ; A. SRINIVASULU.** Face detection system on adaboost algorithm using Haar Classifiers. *International Journal of Modern Engineering Research (IJMER),* Septembre 2012, vol. 2 (5), 3556-3560
- *Review on text String Detectionfrom Natural Scenes, International Journal of Engineering and Innovative Technology (IJEIT),* Octobre 2012, vol. 2 (4
- **C. WOLF ; J.M. JOLION.** Extraction and Recognition ofArticicial Text in Multimedia Documents. *Formal Pattern Analysis & Applications,* Février 2004, vol. 6 (4), 309-326
- **N. DALAL ; B. TRIGGS.** Histogram of Oriented Gratient for human detection. *IEEE Computer Society Conference on Computer Vision and Pattern Recognition (CVPR'05),* 2005
- **A SURVEY ; D. HUANG et al.** Local Binary Patterns and Its Application to Facial Image Analysis. *IEEE Transactions on Systems Man and Cybernetics Part C (Applications and Reviews),* Novembre 2011, vol. 41 (6), 765-781
- **JUNG, C. R. ; R. SCHRAMM.** Rectangle Detection based on a Windowed Hough Transform. *Brazilian Symposium on Computer Graphics and Image Processing (SIBGRAPI),* 2004
- **FAN, JIAN.** Detection of quadrilateral document regions from digital photographs. *WACV2016*